# EUROPÄISCHE PATENTANMELDUNG

(11) **EP 0 661 480 A1**
(43) Veröffentlichungstag der Anmeldung: **05.07.1995**
(21) Anmeldenummer: 94109452.6
(22) Anmeldetag: 18.06.1994
(51) Int. Cl.: F16J 15/12

(54) **Dichtung**

(30) Priorität: 01.12.1993 DE 4340909
(71) Anmelder: Firma Carl Freudenberg, D-69469 Weinheim (DE)
(72) Erfinder: Kief, Rainer, D-68799 Reilingen (DE)

(57) **Zusammenfassung**

Dichtung zur Verwendung zwischen den Dichtflächen (1, 2) eines ersten (3) und zweiten Maschinenteils (4), umfassend einen Stützkern (5) aus metallischem Werkstoff, der zumindest in Richtung der beiderseits angrenzenden Dichtflächen (1, 2) mit einer Beschichtung (6) aus elastomerem Werkstoff versehen ist, wobei der Stützkern (5) und die Beschichtung (6) zumindest eine gemeinsame Durchbrechung (7) aufweisen und der Stützkern (5) mit zumindest einem Kompressionsbegrenzer (8) versehen ist, wobei der Kompressionsbegrenzer (8) die Oberfläche (9) des Stützkerns (5) zumindest im Bereich der Durchbrechung (7) beiderseits in Richtung der angrenzenden Dichtflächen (1, 2) überragt. Der Kompressionsbegrenzer (8) ist durch in den Stützkern eingeprägte Erhöhungen (10) gebildet, die der umfangsseitigen Begrenzung der Durchbrechung (7) mit Abstand benachbart zugeordnet sind.

## Beschreibung

Die Erfindung betrifft eine Dichtung zur Verwendung zwischen den Dichtflächen eines ersten und zweiten Maschinenteils, umfassend einen Stützkern aus metallischem Werkstoff, der zumindest in Richtung der beiderseits angrenzenden Dichtflächen mit einer Beschichtung aus elastomerem Werkstoff versehen ist, wobei der Stützkern und die Beschichtung zumindest eine gemeinsame Durchbrechung aufweisen und der Stützkern mit zumindest einem Kompressionsbegrenzer versehen ist, wobei der Kompressionsbegrenzer die Oberfläche des Stützkerns zumindest im Bereich der Durchbrechung beiderseits in Richtung der angrenzenden Dichtflächen überragt.

Eine derartige Dichtung ist aus der DE-PS 38 31 413 bekannt. Die Dichtung ist als Gummiformdichtung ausgebildet und gelangt insbesondere in Verbrennungskraftmaschinen als Ölwannendichtung oder Ventildeckeldichtung zur Anwendung. Der Stützkern und der Kompressionsbegrenzer sind einstückig ineinander übergehend ausgebildet, wobei der Kompressionsbegrenzer die Durchbrechung außenumfangsseitig vollständig umschließt. Dabei ist allerdings zu beachten, daß die Herstellung eines derartigen Stützkerns in fertigungstechnischer und wirtschaftlicher Hinsicht wenig befriedigend ist. Durch die Umformung des Randbereichs ist eine gute Maßhaltigkeit sowohl der Kompressionsbegrenzer als auch der Durchmesser der Durchbrechungen nur mit großem fertigungstechnischem Aufwand zu erzielen.

Der Erfindung liegt die Aufgabe zugrunde, eine Dichtung der vorbekannten Art derart weiter zu entwickeln, daß sie in fertigungstechnischer und wirtschaftlicher Hinsicht einfacher und kostengünstiger herstellbar ist und daß eine bessere Maßhaltigkeit der Dichtung zu erreichen ist.

Diese Aufgabe wird erfindungsgemäß mit den kennzeichnenden Merkmalen von Anspruch 1 gelöst. Auf vorteilhafte Ausgestaltungen nehmen die Unteransprüche bezug.

Im Rahmen der vorliegenden Erfindung ist es vorgesehen, daß der Kompressionsbegrenzer durch in den Stützkern eingeprägte Erhöhungen gebildet ist, die der umfangsseitigen Begrenzung der Durchbrechung mit Abstand benachbart zugeordnet sind. Hierbei ist von Vorteil, daß die Durchbrechungen unabhängig von den als Kompressionsbegrenzer ausgebildeten Erhöhungen herstellbar sind. Herstellungsbedingte Abweichungen der Abmessungen können durch eine derartige Ausgestaltung minimiert werden.

Gemäß einer Vorteilhaften Ausgestaltung können die Erhöhungen einen wannenförmigen Querschnitt aufweisen und der Durchbrechung nur in Längsrichtung des Stützkörpers beiderseits benachbart zugeordnet sein. Insbesondere für Anwendungsfälle, in denen der Raum zur Aufnahme der Dichtung, quer zur Längsrichtung des Stützkerns begrenzt ist, ist eine derartige Ausgestaltung von Vorteil. Für eine effiziente Kompressionsbegrenzung ist es nicht erforderlich, daß sich die Erhöhungen entlang des gesamten Umfangs der Durchbrechung erstrecken. Der von der Beschichtung umschlossene Stützkern kann dadurch besonders schlank ausgeführt werden. Insbesondere für die Verwendung als Ölwannendichtung ist das von Vorteil.

Die Erhöhungen können die Durchbrechungen in Umfangssegmenten umschließen, wobei die in entgegengesetzter Richtung vorspringenden Erhöhungen auf jeder Seite der Durchbrechung sinusförmig und einstückig ineinander übergehend ausgebildet sind. Hierbei ist von Vorteil, daß die Umfangssegmente, die die angrenzenden Dichtflächen der Maschinenteile anliegend berühren auch dann die Verpressung der Dichtung zuverlässig begrenzen, wenn die Verschraubung der beiden Maschinenteile mit einem hohen Anzugsdrehmoment von beispielsweise mehr als 10 Nm vorgenommen wird. Das wellenförmige Profil der sinusförmig ineinander übergehenden Erhöhungen kann in einem Verfahrensschritt vorgenommen werden, wodurch eine einfache Fertigung des Stützkerns bedingt ist.

Nach einer anderen Ausgestaltung können die Erhöhungen durch halbkugelförmige Noppen gebildet sein, wobei, in Längsrichtung betrachtet, auf jeder Seite der Durchbrechung quer zur Längsrichtung des Stützkerns zwei gegensinnig geprägte Erhöhungen einander benachbart zugeordnet sind und wobei die gleichsinnig geprägten Erhöhungen einander diagonal gegenüberliegend der Durchbrechung angeordnet sind. Kippbewegungen der Dichtung bei ihrer Befestigung zwischen den beiden Dichtflächen der Maschinenteile können dadurch ausgeschlossen werden. Die halbkugelförmigen Noppen können im Bereich ihrer höchsten Erhebung eine Abplattung aufweisen, die während der bestimmungsgemäßen Verwendung der Dichtung oberflächenbündig mit der Oberfläche der Beschichtung abschließen. Die kuppelförmige Gestalt der Noppen bedingt eine große Festigkeit der Kompressionsbegrenzer bei axialer Verpressung zwischen den beiden Maschinenteile. Die Herstellung derart einander benachbarter Noppen kann in fertigungstechnischer Hinsicht durch einen Prägestempel vorgenommen werden, der unter Zwischenfügung des Stützkerns gegen ein Widerlager mit kongruenter Oberfläche gepreßt wird.

Um zu gewährleisten, daß die Ausdehnung des Stützkerns quer zu seiner Längsrichtung des Stützkerns möglichst gering ist, so daß die Dichtung auch dann zur Anwendung gelangen kann, wenn die Platzverhältnisse quer zur Längsrichtung im Einbauraum begrenzt sind, kann das Verhältnis der Ausdehnung aller Erhöhungen auf jeder Seite der Durchbrechung quer zur Längsrichtung des Stützkerns zur Ausdehnung der Durchbrechung in gleicher Richtung 1 bis 1,5 betragen. Die Erhöhungen, die die Kompressionsbegrenzer bilden, bedingen dadurch keine größeren Abmessungen der Dichtung. Der Stützkern ist dadurch nicht breiter auszuführen, als dies ohnehin zur Anordnung der Durchbrechungen erforderlich ist.

Sind die Durchbrechungen beispielsweise zum Durchgang von Schrauben, Öl- oder Kühlmittelleitungen rund gestaltet, können sich die Kompressionsbegrenzer in einem 45°-Segment entlang der Begrenzung der Durchbrechung erstrecken. Die verbleibenden Segmente am Außenumfang der Durchbrechung, die in diesem Beispiel dann quer zur Längsrichtung des Stützkerns angeordnet sind, schließen einen Winkel von jeweils 135° ein. Die Dichtung kann dadurch außerordentlich schmal ausgeführt sein.

Der Stützkern kann zumindest eine Ausnehmung aufweisen, die vom elastomeren Werkstoff der Beschichtung formschlüssig durchdrungen ist. Hierbei ist von Vorteil, daß die Beschichtung den metallischen Stützkern durchdringt und dadurch eine mechanische Verkrallung bedingt. Zusätzlich können an sich bekannte, adhäsive Verbindungen Anwendung finden.

Die Erhöhungen können im Bereich ihrer größten Ausdehnung mit der Oberfläche des Beschichtung Oberflächenbündig in einer Ebene angeordnet sein und die Oberfläche der Beschichtung gerade durchdringen. Hierbei ist von Vorteil, daß bei Verpressung der Dichtung zwischen den Dichtflächen der abzudichtenden Maschinenteile ein unmittelbarer Berührungskontakt zwischen dem Stützkern und den Dichtflächen besteht. Relaxationserscheinungen sind dadurch auch während einer langen Gebrauchsdauer nicht zu befürchten, so daß die Schraubenspannkraft, die die beiden Maschinenteile zusammenhält, stets von übereinstimmender Größe ist.

Die Beschichtung kann auf den den Dichtflächen zugewandten Seiten mit zumindest jeweils einer Dichtlippe versehen sein. Die Dichtlippen dichten die Durchbrechungen und den abzudichtenden Raum gegen die Umgebung ab. Bevorzugt gelangen zwei Dichtlippen zur Anwendung, die im Bereich des Innen- und des Außenumfangs der Dichtung umlaufen.

Die erfindungsgemäße Dichtung wird nachfolgend anhand der beigefügten Zeichnungen weiter erläutert. Es zeigen:
Fig. 1 einen Ausschnitt aus der Draufsicht des Stützkerns;
Fig. 2 einen Längsschnitt durch den Stützkern aus Fig. 1 entlang der Linie E-F;
Fig. 3 einen Querschnitt durch den Stützkern aus Fig. 1; entlang der Linie G-H;
Fig. 4 ein zweites Ausführungsbeispiel eines Stützkerns in einer Draufsicht;
Fig. 5 einen Längsschnitt durch der Stützkern aus Fig. 4 entlang der Linie J-K;
Fig. 6 ein drittes Ausführungsbeispiel des Stützkerns in einer Draufsicht;
Fig. 7 eine Draufsicht auf die Dichtung als Kompletteil;
Fig. 8 einen Längsschnitt durch die Dichtung aus Fig. 7 entlang der Linie A-B;
Fig. 9 einen Querschnitt durch die Dichtung aus der Fig. 7 entlang der Linie C-D

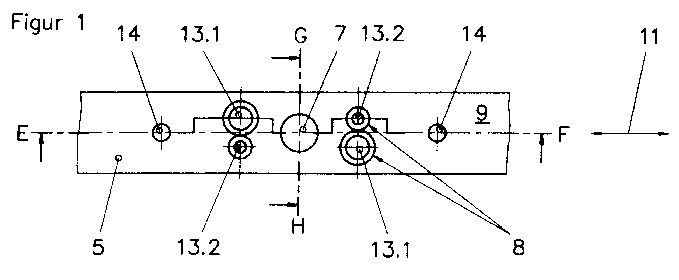

In den Figuren 1 bis 3 ist ein erstes Ausführungsbeispiel eines Stützkerns 5 gezeigt, der während der bestimmungsgemäßen Verwendung von einer Beschichtung 6 aus elastomerem Werkstoff umschlossen ist. Der Stützkern 5 besteht in diesem Ausführungsbeispiel aus verzinktem Blech und weist Durchbrechungen 7 auf, die einander in Längsrichtung 11 mit Abstand benachbart zugeordnet sind. Die Durchbrechungen sind in diesem Ausführungsbeispiel als Durchgangsbohrungen für eine Schraubenverbindung ausgeführt. Zwischen den in Längsrichtung 11 benachbarten Durchbrechungen 7 sind Ausnehmungen 14 angeordnet, die vom elastomeren Werkstoff der Beschichtung im Anschluß an die Herstellung der Dichtung formschlüssig durchdrungen sind. Die Durchbrechungen 7 des Stützkerns 5 sind in Längsrichtung 11 beiderseits von Kompressionsbegrenzern 8 umgeben, die in diesem Beispiel als Noppen 13 ausgebildet sind. Die Erhöhungen 10, die durch die Noppen 13 gebildet sind, sind dem Randbereich der Durchbrechungen 7 mit radialem Abstand benachbart zugeordnet. Auf jeder Seite der Durchbrechungen 7 sind die Erhöhungen 10 paarweise angeordnet. Um eine Kippbewegung der Dichtung während der Montage zwischen zwei einander benachbarten Dichtflächen 1, 2 von Maschinenteilen 3, 4 zu gewährleisten, handelt es sich bei dem einen Noppen 13.1 um ein positives und bei dem benachbart angrenzenden Noppen 13.2 um ein Negativprofil. Die Noppen 13, die gleichsinnig ausgebildet sind, sind einander diagonal gegenüberliegend der Durchbrechungen 7 angeordnet.

Es ist von hervorzuhebender Bedeutung, daß die Ausdehnung der Erhöhungen 10.1, 10.2 quer zur Längsrichtung 7 des Stützkerns 5 den Durchmesser der Durchbrechungen 7 nur unwesentlich überragt. Eine besonders schmale Bauform des Stützkerns 5 ist dadurch bedingt. Das Verhältnis zwischen dem Durchmesser der Durchbrechungen 7 und der Ausdehnung der Erhöhungen 10.1, 10.2 quer zur Längsrichtung 7 des Stützkerns 5 beträgt in diesem Ausführungsbeispiel 1,2.

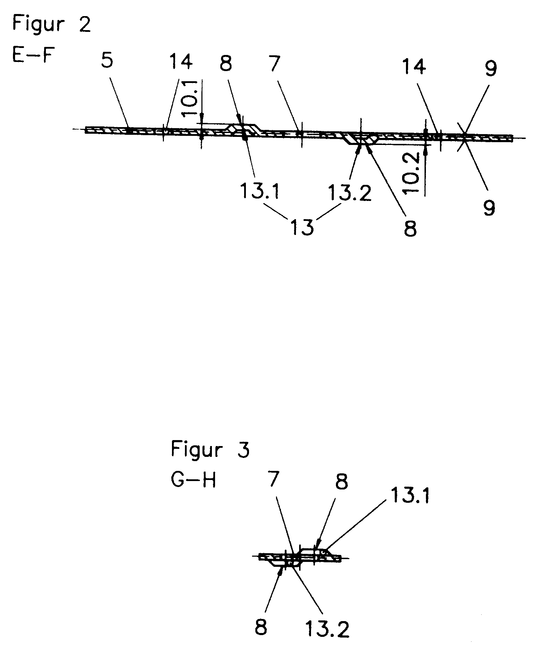

In Figur 2 ist ein Längsschnitt entlang der Linie E-F aus Figur 1 gezeigt. Die Noppen 13, die den Durchbrechungen 7 in Längsrichtung 11 des Stützkerns 5 benachbart zugeordnet sind, überragen den Stützkern 5 in Richtung der angrenzenden Dichtflächen 1, 2 beidseitig. Die Ausnehmungen 14, die zur Bildung einer formschlüssigen Verbindung zwischen dem Stützkern 5 und der Beschichtung 6 dienen, weisen einen im Vergleich zu den Durchbrechungen 7 relativ verringerten Durchmesser auf.

In Figur 3 ist zu erkennen, daß die gesamte Erstreckung der als Kompressionsbegrenzer 8 ausgebildeten Noppen 13.1, 13.2 quer zur Längsrichtung 11 eine Ausdehnung aufweisen, die den Durchmesser der in diesem Beispiel rund ausgeführten Durchbrechung 7 nur unwesentlich überragt.

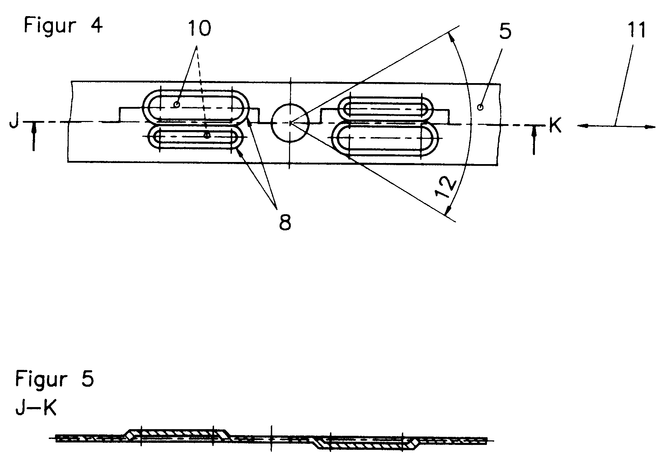

Ein von Fig. 1 abweichendes Ausführungsbeispiel ist in Figur 4 gezeigt. Abweichend von den Figur 1 dargestellten Noppen 13, die die Erhöhungen 10 bilden, sind die als Kompressionsbegrenzer 8 ausgebildeten Erhöhungen 10 in diesem Ausführungsbeispiel derart ausgebildet, daß sie die Durchbrechungen 7 im Bereich jeweils eines Umfangssegments 12 umschließen. Die Umfangssegmente 12 sind den Durchbrechungen 7 in Längsrichtung 11 des Stützkerns 5 benachbart zugeordnet.

In Fig. 5 ist ein Längsschnitt entlang der Linie J-K aus Fig. 4 gezeigt.

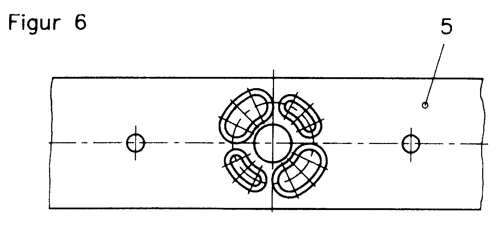

In Fig. 6 ist eine drittes Ausführungsbeispiel des Stützkerns 5 gezeigt.

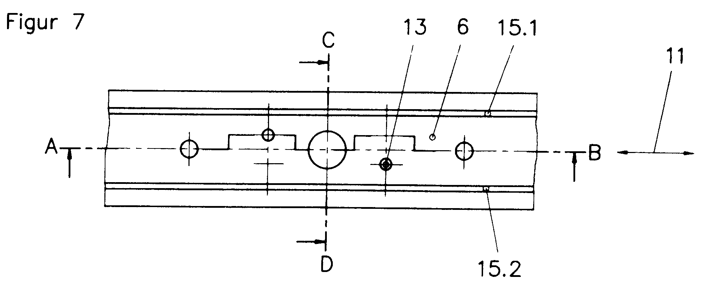

In Figur 7 ist die Dichtung in einem Ausschnitt als Einzelteil dargestellt, wobei die Noppen 13 und die Beschichtung 6 oberflächenbündig ausgeführt sind. Die Noppen 13 berühren die angrenzenden Dichtflächen 1, 2 des ersten und des zweiten Maschinenteils 3, 4 unmittelbar anliegend. Die Dichtung ist von zwei umlaufenden Dichtlippen 15.1, 15.2 in Längsrichtung 11 umschlossen, wobei die Dichtlippen 15.1, 15.2 die Kompressionsbegrenzer 8 einschließen.

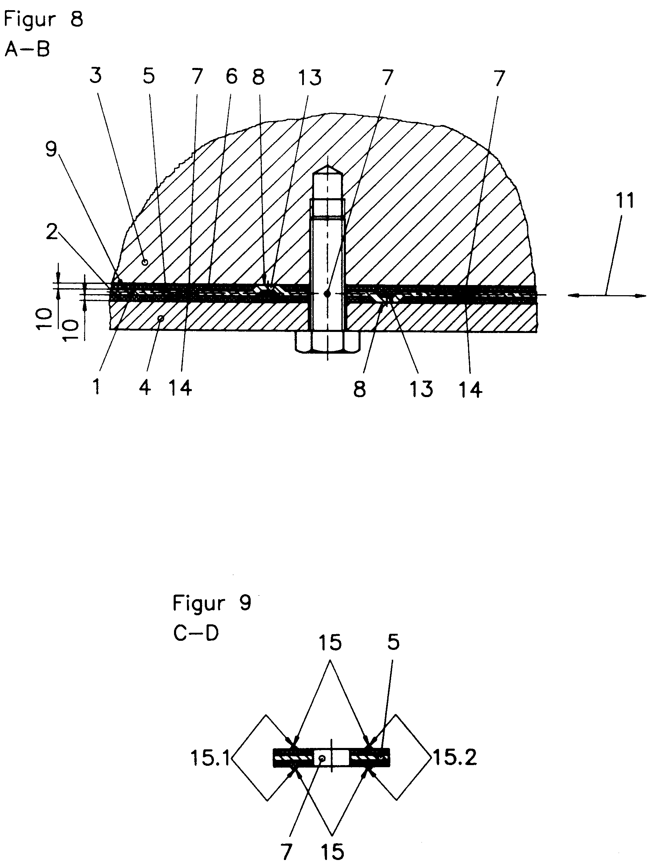

In Figur 8 ist ein Längsschnitt durch die Dichtung aus Fig. 7 entlang der Linie A-B gezeigt, wobei die formschlüssige Verbindung der Beschichtung 6 durch die Ausnehmungen 14 zu erkennen ist.

In Figur 9 ist ein Querschnitt durch die Dichtung aus Fig. 7 entlang der Linie C-D gezeigt, wobei sich die Schnittführung von der Begrenzung der Dichtung durch den Kompressionsbegrenzer 8 und die Durchbrechung 7 erstreckt. Die Ausdehnung der Kompressionsbegrenzer 8 in Richtung der Verpressung ist derart bemessen , daß die Dichtlippen 15 auch bei fester Verschraubung der beiden Maschinenteile 3, 4 miteinander keiner mechanischen Überbeanspruchung ausgesetzt sind. Die Gebrauchseigenschaften der Dichtung sind dadurch während der gesamten Gebrauchsdauer übereinstimmend gut. Die Dichtlippen 15.1 und 15.2 sind quer zur Längsrichtung 11 des Stützkerns 5 angeordnet und dichten die Durchbrechung 7 ab.

### Bezugszeichenliste :

- 1: Dichtfläche des ersten Maschinenteils 3
- 2: Dichtfläche des zweiten Maschinenteils 4
- 3: erstes Maschinenteil
- 4: zweites Maschinenteil
- 5: Stützkern
- 6: Beschichtung
- 7: Durchbrechung
- 8: Kompressionsbegrenzer
- 9: Oberfläche des Stützkerns 5
- 10: Erhöhung
- 11: Längsrichtung
- 12: Umfangssegment
- 13: Noppen
- 14: Ausnehmung
- 15: Dichtlippe
- 15.1: erste Dichtlippe
- 15.2: zweite Dichtlippe

## Patentansprüche

1. Dichtung zur Verwendung zwischen den Dichtflächen eines ersten und zweiten Maschinenteils, umfassend einen Stützkern aus metallischem Werkstoff, der zumindest im Bereich der beiderseits angrenzenden Dichtflächen mit einer Beschichtung aus elastomerem Werkstoff versehen ist, wobei der Stützkern und die Beschichtung zumindest eine gemeinsame Durchbrechung aufweisen und der Stützkern mit zumindest einem Kompressionsbegrenzer versehen ist, wobei der Kompressionsbegrenzer die Oberfläche des Stützkerns zumindest im Bereich der Durchbrechung beiderseits in Richtung der angrenzenden Dichtflächen überragt, dadurch gekennzeichnet, daß der Kompressionsbegrenzer (8) durch in den Stützkern eingeprägte Erhöhungen (10) gebildet ist, die der umfangsseitigen Begrenzung der Durchbrechung (7) mit Abstand benachbart zugeordnet sind.

2. Dichtung nach Anspruch 1, dadurch gekennzeichnet, daß die Erhöhungen (10) einen wannenförmigen Querschnitt aufweisen und der Durchbrechung (7) nur in Längsrichtung (11) des Stützkerns (5) beiderseits benachbart zugeordnet sind.

3. Dichtung nach Anspruch 1 bis 2, dadurch gekennzeichnet, daß die Erhöhungen (10) die Durchbrechung (7) in Umfangssegmenten (12) umschließen und daß die in entgegengesetzter Richtung vorspringenden Erhöhungen (10) auf jeder Seite der Durchbrechung (7) sinusförmig und einstückig ineinander übergehend ausgebildet sind.

4. Dichtung nach Anspruch 1 bis 2, dadurch gekennzeichnet, daß die Erhöhungen (10) durch im wesentlichen halbkugelförmige Noppen (13) gebildet sind, daß, in Längsrichtung (11) betrachtet, auf jeder Seite der Durchbrechung (7), quer zur Längsrichtung (11) des Stützkerns (5) zwei gegensinnig geprägte Erhöhungen (10.1, 10.2) einander benachbart zugeordnet sind und daß die gleichsinnig eingeprägten Erhöhungen (10.1, 10.1; 10.2, 10.2) einander diagonal gegenüberliegend der Durchbrechung (7) angeordnet sind.

5. Dichtung nach Anspruch 1 bis 4, dadurch gekennzeichnet, daß das Verhältnis der Ausdehnung aller Erhöhungen (10) auf jeder Seite der Durchbrechung (7) quer zur Längsrichtung (7) des Stützkerns (5) zur Ausdehnung der Durchbrechung (7) in gleicher Richtung 1 bis 1,5 beträgt.

6. Dichtung nach Anspruch 1 bis 5, dadurch gekennzeichnet, daß der Stützkern (5) zumindest eine Ausnehmung (14) aufweist, die vom elastomeren Werkstoff der Beschichtung (6) formschlüssig durchdrungen ist.

7. Dichtung nach Anspruch 1 bis 6, dadurch gekennzeichnet, daß die Erhöhungen (10) im Bereich ihrer größten Ausdehnung mit der Oberfläche der Beschichtung (6) Oberflächenbündig in einer Ebene angeordnet sind und und die Oberfläche der Beschichtung (6) gerade durchdringen.

8. Dichtung nach Anspruch 1 bis 7, dadurch gekennzeichnet, daß die Beschichtung (6) auf den den Dichtflächen (1, 2) zugewandten Seiten mit zumindest jeweils einer Dichtlippe (15) versehen ist.
